(19)

**Europäisches Patentamt**
**European Patent Office**
**Office européen des brevets**

(11) **EP 4 435 419 B1**

(12) **EUROPEAN PATENT SPECIFICATION**

(45) Date of publication and mention
of the grant of the patent:
**24.09.2025 Bulletin 2025/39**

(21) Application number: **23315054.9**

(22) Date of filing: **20.03.2023**

(51) International Patent Classification (IPC):
**G01N 23/083** (2018.01)  **G01N 29/11** (2006.01)

(52) Cooperative Patent Classification (CPC):
**G01N 23/083; G01N 29/11;** G01N 2291/0237;
G01N 2291/048

(54) **METHOD AND APPARATUS FOR BASIS WEIGHT MEASUREMENT OF SHEETS OR FOILS, COMBINING AN X-RAY SENSOR AND AN ULTRASONIC SENSOR**

VERFAHREN UND VORRICHTUNG ZUR FLÄCHENGEWICHTSMESSUNG VON BLÄTTERN ODER FOLIEN, DIE EINEN RÖNTGENSENSOR UND EINEN ULTRASCHALLSENSOR KOMBINIEREN

PROCÉDÉ ET APPAREIL DE MESURE DE GRAMMAGE DE FEUILLES OU DE FEUILLES, COMBINANT UN CAPTEUR DE RAYONS X ET UN CAPTEUR ULTRASONORE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**25.09.2024 Bulletin 2024/39**

(73) Proprietors:
• **Aleph**
**73290 La Motte-Servolex (FR)**
• **Meareg UG**
**86911 Dießen am Ammersee (DE)**

(72) Inventors:
• **Gaudaen, Jan**
**73100 AIX LES BAINS (FR)**
• **Florent, Jean-Jacques**
**74150 Thusy (FR)**
• **Lengewitz, Jens**
**86911 Dießen am Ammersee (DE)**

(74) Representative: **IP Trust**
**2, rue de Clichy**
**75009 Paris (FR)**

(56) References cited:
• **JASIUNIENE ELENA ET AL: "Non-Destructive Evaluation of the Quality of Adhesive Joints Using Ultrasound, X-ray, and Feature-Based Data Fusion", APPLIED SCIENCES, vol. 12, no. 24, 1 December 2022 (2022-12-01), pages 12930, XP093072878, ISSN: 2076-3417, DOI: 10.3390/ app122412930**
• **ROCHE A ET AL: "RIGID REGISTRATION OF 3-D ULTRASOUND WITH MR IMAGES: A NEW APPROACH COMBINING INTENSITY AND GRADIENT INFORMATION", IEEE TRANSACTIONS ON MEDICAL IMAGING, IEEE, USA, vol. 20, no. 10, 1 October 2001 (2001-10-01), pages 1038 - 1049, XP001107728, ISSN: 0278-0062, DOI: 10.1109/42.959301**
• **WOLFGANG WEIN ET AL: "Automatic Registration and Fusion of Ultrasound with CT for Radiotherapy", 1 January 2005, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 303 - 311, ISBN: 978-3-540-74549-5, XP019021769**
• **LEACH WILLIAM ET AL: "Fourier method for 3-dimensional data fusion of X-ray Computed Tomography and ultrasound", NDT&E INTERNATIONAL, ELSEVIER, AMSTERDAM, NL, vol. 127, 30 December 2021 (2021-12-30), XP086960333, ISSN: 0963-8695, [retrieved on 20211230], DOI: 10.1016/J.NDTEINT.2021.102600**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 435 419 B1

## Description

### FIELD OF THE INVENTION

The context of the invention is that of the manufacturing of flat products, such as paper, certain plastics, or coated foils intended for example to form thin film battery elements such as electrodes, that require the control of these flat products characteristics during their formation.

### BACKGROUND OF THE INVENTION

Foils or sheets under formation (designated as "products" in the following) can present widths reaching up to ten meters or more, and are run continuously along a machine direction, and require to be constantly monitored by non-contact measurement systems. Monitoring the characteristics of such products is performed by in-situ measurement devices comprising sensors mounted on mechanical frames capable of moving these sensors across the width of the running product being formed, so as to produce profiles of a measured physical characteristic.

Some sensors perform absorption measurements of some sort of radiation sent through the product: an emitting head of the sensor sends a radiation towards the product while a detecting head performs a measurement of the radiation transmitted through the product. Both heads are moved together across the product so as to always face each other.

The radiation can be of various types, each corresponding to a given sensor type: ultrasonic waves as described in US 5,621,173 or US 4,446,735, beta radiation, X-rays as described in GB 1271438 or EP 1950527, or infrared radiation. The sensor type is selected depending on the material to be characterized and the specific needs of the practitioner.

A non-destructive evaluation of adhesively bonded aerospace components, that involves the fusion of images obtained by ultrasound pulse echo and radiography techniques, is described in an article by Jasiuniene Elena et al., "Non-destructive Evaluation of the Quality of Adhesive Joints Using Ultrasound, X-ray, and Feature-based Delta Fusion", Applied Science, vol. 12, no. 24, 2022/12/01, page 12930.

Characterizing a product that is uniform and stable in composition is a task that is routinely performed. However, characterizing a product that lacks even one these features is much more challenging.

This poses acute difficulties in the context of laboratory lines, on which processes are tested prior to be exported onto pilot lines and finally into factory production lines. On factory production lines, the fabrication process is stable, the characteristics of the product under fabrication are well-known and stable and the equipment, including the monitoring sensors, are calibrated for all specific products. In contrast, on laboratory lines, processes are routinely changed in order to test the characteristics of various product compositions and the effects of fabrication parameters onto the fabrication process and the final product. In that case, sensor calibration may have to be redone for every new batch of tests, which is often not practical or not even feasible.

Except the issues linked to the stability and the variability of the fabrication process, some products cannot, intrinsically, be properly characterized by existing monitoring tools. For example, when coating a foil intended to form a battery electrode, the coating may have a solvent content which can voluntarily (in the case of tests) or involuntarily vary over time. The coating process may also form patterns presenting abrupt edges. Conventional characterizing means are unable to take these features into account to deliver, for example, a reliable profile of the actual basis weight, or grammage, of the final product.

### OBJECT OF THE INVENTION

In view of the issues mentioned above, the applicant considered combining two types of sensors having complementary characteristics to characterized a heterogeneous product.

More specifically, the applicant determined that performing simultaneously X-ray measurements and ultrasonic measurements on the product provides data apt at producing quantitatively accurate basis weight profiles of the product even though this product may be of unknown composition and present strong topological variations such as coating edges.

### SUMMARY OF THE INVENTION

To this effect, a first aspect of the invention relates to a method of measuring a basis weight profile of a product by an X-ray characterization, comprising the steps of performing an X-ray absorption measurement based on transmission of X-rays through the product and an ultrasonic intensity wave measurement on the product based on a reaction of the product to an ultrasonic wave directed towards the product so as to obtain (i) X-ray measurement data representative of a basis weight profile of the product over a width of the product as perceived via the X-ray absorption measurement and (ii) ultrasonic wave measurement data representative of said basis weight profile of the product over said width of this product as perceived via the ultrasonic wave measurement, calculating a calibration coefficient of the X-ray measurement data by taking the ultrasonic wave measurement data as reference, the calibration coefficient being based on a ratio between the X-ray measurement data and the ultrasonic wave measurement data; and calculating corrected values of the X-ray measurement data by multiplication of the X-ray measurement data by the calibration coefficient.

Such a method allows producing quantitatively accurate basis weight profiles of the product even when this product is of unknown composition and presents strong topological variations such as coating edges.

According to further non limitative features of the first aspect of the invention, either taken alone or in any technically feasible combination:

- the calibration coefficient is based on a ratio between a linearization function applied to the X-ray measurement data and a linearization function applied to the ultrasonic wave measurement data;
- the section of the product comprising at least one pattern on a supporting substrate, the method can further comprise the steps of determining an extension of a plateau formed by the pattern on the support substrate, the X-ray measurement data and the ultrasonic wave measurement data used to calculate the calibration coefficient belonging to the extension;
- the extension can be free of topographic singularities;
- the method can be applied to a product being fabricated by forming patterns of coating on a support substrate by means of a coating apparatus, the X-ray absorption measurement and the ultrasonic wave measurement being performed downstream of the coating apparatus;
- the X-ray measurement data can be differential data relative to a reference measurement performed upstream of the coating apparatus; and
- the method can comprise a step of calculating a basis weight profile of the product based on the X-ray measurement data and the calibration coefficient.

A second aspect of the invention relates to a method for calculating the weight ratio of a chemical compound in a product comprising the steps of determining, according to the first aspect of the invention, a first calibration coefficient of the chemical compound, determining, according to the first aspect of the invention, a second calibration coefficient of a modified product of a same composition of the product except that the modified product does not substantially comprise the chemical compound, determining, according to the first aspect of the invention, a third calibration coefficient of the product, and calculating the weight ratio based on the first calibration coefficient, the second calibration coefficient, and the third calibration coefficient.

A third aspect of the invention relates to a measurement apparatus comprising a frame extending along a width direction, a sensor movable along the width direction, and a drive system configured to move the sensor along the width direction, the sensor comprising an emitter head and a receiver head facing the emitter head, and a control system configured to control the sensor and the drive system and comprising a computer memory and an electronic computer, wherein the emitter head comprises an X-ray source and an ultrasonic wave source, the receiver head comprises (i) an X-ray detector and (ii) an ultrasonic wave detector, and the control system is configured to perform the method of performing an X-ray characterization of a product according the first aspect of the invention.

A fourth aspect of the invention relates to a production line comprising the measurement apparatus according to the third aspect of the invention and a coating apparatus situated upstream of the measurement apparatus. The production line can further comprise a reference X-ray measurement apparatus configured to perform reference X-ray absorption measurements and situated upstream of the coating apparatus.

## FIGURES

Many other features and advantages of the present invention will become apparent from reading the following detailed description, when considered in conjunction with the accompanying drawings, in which:

- Figure 1 illustrates a combined X-ray / ultrasonic wave measurement system;
- Figure 2 illustrates a sensor of the system of Figure 1;
- Figure 3 illustrates a fabrication line of which the measurement system of Figure 1 is part of;
- Figure 4 illustrates functioning of the sensor of Figure 2;
- Figure 5 illustrates a product that can be characterized by the system of Figure 1;
- Figure 6 illustrates a functioning principle of the system of Figure 1;
- Figure 7 illustrates functioning of the system of Figure 1;
- Figure 8 illustrates profiles obtained by means of the measurement system of Figure 1;
- Figure 9 illustrates a characterization process implemented by the system of Figure 1;
- Figure 10 illustrates linearized X-ray and ultrasonic wave measurement data; and
- Figure 11 illustrates a characterization process based on the process of Figure 9.

## DETAILED DESCRIPTION OF A SPECIFIC EMBODIMENT OF THE INVENTION

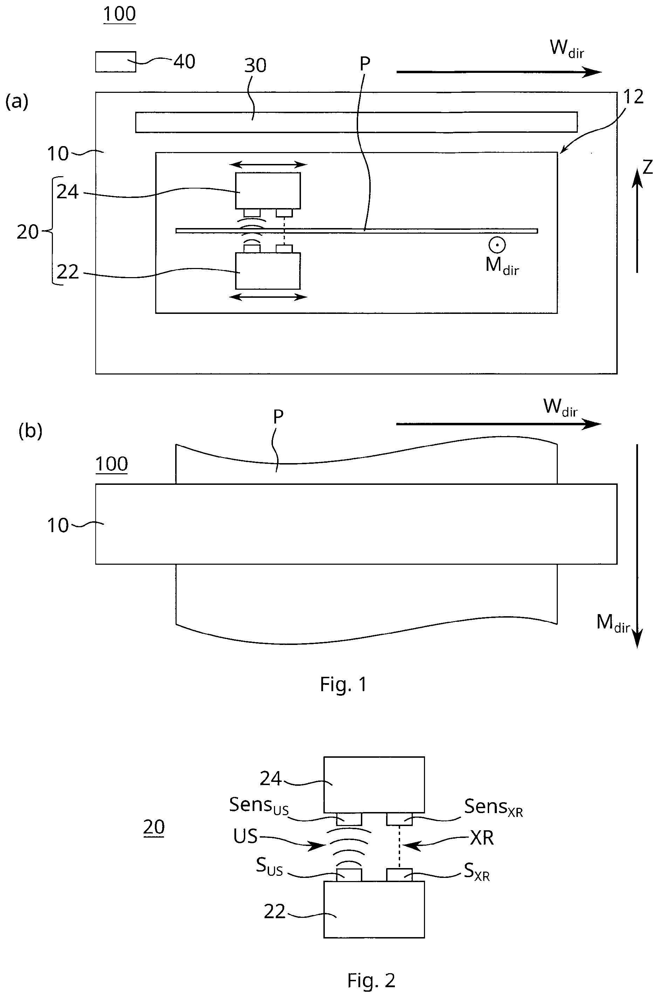

Figure 1 illustrates a measurement apparatus 100 in operation, comprising a frame 10 defining an aperture 12, the frame and the aperture extending along a width direction $W_{dir}$, a sensor 20 movable along the width direction $W_{dir}$ within the aperture 12, and a drive system 30 configured to move the sensor 20 along the width direction $W_{dir}$. The sensor 20 comprises an emitter head 22 and a receiver head 24 facing the emitter head 22. In (a), the measurement apparatus 100 is represented in a front view, as seen in the machine direction $M_{dir}$, that is in the direction of circulation of a product P being fabricated. When traversing the aperture, the product is maintained in a horizontal plane, perpendicular to the vertical direction indicated as Z in the figure. In (b), the measurement apparatus 100 represented in top view, as seen from above, only a small portion of the product P being represented. The measurement apparatus 100 is configured so as to characterize a product P under formation running horizontally in a machine direction $M_{dir}$ perpendicular to the width direction $W_{dir}$, through the aperture 12 and between the emitter head 22 and the receiver head 24 of the sensor 20.

A control system 40 is functionally connected to the sensor 20 and to the drive system 30, and is configured to operate the sensor 20 and the drive system 30. The control system is equipped with a computer memory and an electronic computer configured to exploit numerical data obtained from the sensor. The control system is configured to scan a product P under formation over its width with the sensor 20 by moving the sensor along the width direction $W_{dir}$. Figure 2 illustrates more specifically the sensor 20. The emitter head 22 comprises (i) an X-ray source $S_{XR}$ and (ii) an ultrasonic wave source $S_{US}$; conversely, the receiver head 24 comprises (i) an X-ray detector $Sens_{XR}$ and (ii) an ultrasonic wave detector $Sens_{US}$. The X-ray source $S_{XR}$ and the X-ray detector $Sens_{XR}$ form together an X-ray sensor; the ultrasonic wave source $S_{US}$ and the ultrasonic wave detector $Sens_{US}$ form together an ultrasonic sensor. The exact position and orientation of the X-ray and ultrasonic sensors are arbitrary located as long as the detectors are configured to face their corresponding sources. In the example illustrated by Figure 2, the X-ray source and the ultrasonic wave source are configured to be on a same side of a material under fabrication, and the X-ray detector and the ultrasonic wave detector are configured to be on the other side. Alternatively, the X-ray source and the ultrasonic wave detector may be configured to be on a same side of a material under fabrication and the X-ray detector and the ultrasonic wave source may be configured to be on the other side.

The sensor 20 is configured so that, in operation, the X-ray source $S_{XR}$ emits X-rays XR towards the X-ray detector $Sens_{XR}$ so that the X-ray detector $Sens_{XR}$ detects the X-rays XR having gone through the product P to be characterized, and the ultrasonic wave source $S_{US}$ emits ultrasonic waves US towards the ultrasonic wave detector $Sens_{US}$ so that the US detector $Sens_{US}$ detects the ultrasonic waves emitted by the material P in response to being excited by the ultrasonic waves emitted by the ultrasonic wave source $S_{US}$. Both characterizations, by X-ray and by ultrasonic wave, are preferably performed simultaneously, but may be performed sequentially.

The control system 40 connected to the sensor 20 form both of an X-ray characterization system and an ultrasonic wave characterization system, or, otherwise stated, a combined X-ray and ultrasonic wave characterization system.

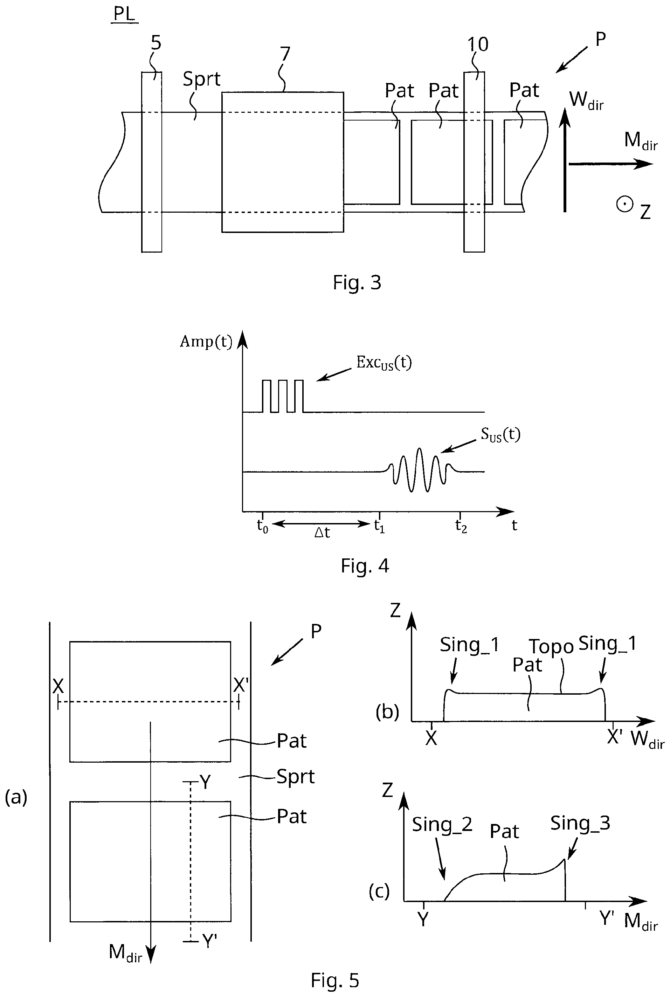

Figure 3 illustrates a production line PL of a product P, the measurement apparatus 100 being integrated in the production line. The product P is, in this example, formed from a support substrate Sprt on which coatings forming patterns Pat are deposited by a coating apparatus 7. The production line may generically be a laboratory line, a pilot line, or a factory production line. The production line comprises a reference X-ray measurement apparatus 5 configured to perform reference X-ray absorption measurements and acquire reference X-ray measurement data, the coating apparatus 7 configured to coat the support substrate by depositing thereon a substance such as an ink so as to form patterns Pat made of the ink.

The frame 10 of the measurement apparatus 100 is located so as to perform measurements on the coated support substrate, downstream of the coating apparatus 7. The measurement apparatus 5 is functionally connected to the measurement apparatus 100, so that measurement data gathered by each of these elements 5 and 100 can be treated by the control system 40. The measurement apparatus 5 may have a structure similar to that of the measurement apparatus 100 to scan a reference X-ray measurement sensor over a width of the product P.

For the sake of conciseness and to keep simple the explanations on the principle of the invention, the description below will concern a line equipped with a single coating apparatus as that of Figure 3. However, in reality, a line may comprise a plurality of coating apparatuses to manufacture products comprising a plurality of superposed coated layers. Also, at the level of the reference X-ray measurement apparatus 5, the support is considered bare, without material thereon, but in reality it may comprise material coated by an upstream coating apparatus. This is not important as the reference X-ray measurement apparatus 5 is used to characterize the state of the product prior to the coating operation by the coating apparatus 7, to serve as a reference of the state of the product prior to this coating. The coating deposited by the coating apparatus 7 will be characterized by way of differential measurements performed downstream, as explained below.

Characterization based on transmission of X-rays

X-ray characterization of a product can be based on the fact that X-rays, as an electromagnetic radiation, are partially absorbed when they pass through a product of a given chemical composition, the magnitude of the absorption, and thus of the transmitted portion of the radiation, depending on the basis weight and the chemical composition of the product. The dependency on the chemical composition is more specifically a dependency on the atomic numbers Z of the atoms forming this product.

Monochromatic X-rays are absorbed by the product following the Beer-Lambert law according to the following equation Eq. 1:

$$\frac{I}{I_0} = e^{-\frac{\mu}{\rho}W} \qquad \text{Eq.1}$$

where $I$ is the intensity transmitted through the product and measured, $I_0$ is the intensity measured in the absence of the product, $\frac{\mu}{\rho}$ is the mass absorption coefficient of the material constituting the product at the energy of the incoming X-rays, and W is the basis weight of this material. It can be easily seen that the inversion of this equation leads to equation Eq. 2:

$$W = -\frac{\rho}{\mu}\left(\ln\frac{I}{I_0}\right) \qquad \text{Eq. 2}$$

An operation of calibration of an X-ray measurement system usually consists in determining the value of the constant $\frac{\rho}{\mu}$ by comparing X-ray measurements to reference measurements performed in a laboratory in controlled conditions.

In real conditions, emitted X-rays exhibit a spectrum of energy, which complicates the equations, but does not change the principle outlined above. So, the basis weight W can still be expressed as a function of the ratio $\frac{I}{I_0}$ multiplied by $\frac{\rho}{\mu}$, $\frac{\rho}{\mu}$ being considered as a calibration constant, designated as C in the following. This leads to the following generalized equation Eq. 3

$$W = C \times f_{lin_{XR}}\left(\frac{I}{I_0}\right) \qquad \text{Eq. 3}$$

where C represents the calibration coefficient and $f_{lin_{XR}}$ is a function applied to the X-ray measurement data that replaces the simple logarithm function of equation Eq. 2 to take into account the real spectrum of energy of the X-rays used to performed the measurement. The function $f_{lin_{XR}}$ is often called a linearization function because it transforms the relation between the basis weight W and the measured ratio $\frac{I}{I_0}$ into a linear equation.

Characterization based on transmission of ultrasonic waves

Ultrasonic characterization of a product in the form of a sheet or a foil can be based on the reaction of the product on an ultrasonic wave directed towards the product, and is a purely mechanical characterization, independent of the chemical composition of the product.

In effect, the ultrasonic signal intensity I(t) measured by the ultrasonic wave detector $Sens_{US}$ can be expressed as equation Eq. 4:

$$I_{US} = I_{US0}\int_{t_1}^{t_2} S_{US}(t)\,dt \qquad \text{Eq. 4}$$

where $I_{US}$ represents the measured intensity of an ultrasonic signal emitted by the product excited by an excitation ultrasonic wave, $I_{US0}$ represents the measured intensity of the excitation ultrasonic wave when no product is present, $S_{US}(t)$ represents the amplitude of the measured ultrasonic signal as a function of the time $t$, $t_1$ and $t_2$ indicate the beginning and the end of the time interval over which the measured ultrasonic signal is integrated. The ultrasonic wave intensity is representative of the energy of the ultrasonic wave.

Figure 4 illustrates an excitation ultrasonic signal $Exc_{US}(t)$ generated by the ultrasonic source $S_{US}$ that is, in this example, formed by a plurality of rectangular pulses. Figure 4 also illustrates the amplitude $S_{US}(t)$ of the signal generated by the material excited by the excitation ultrasonic signal and measured by the ultrasonic wave detector $Sens_{US}$ as a transient signal having the general shape of a sine gaussian signal. The time lag $\Delta t$ between the start time $t_0$ of the excitation ultrasonic signal and the start time $t_1$ of the signal $S_{US}(t)$ corresponds to the travelling time between emission of the excitation ultrasonic signal $Exc_{US}(t)$ by the ultrasonic source $S_{US}$ and the detection the signal $S_{US}(t)$ by the ultrasonic wave detector $Sens_{US}$.

During measurement, integration of equation Eq. 4 is naturally performed, so that the dependency over t is cancelled. An interesting feature of ultrasonic characterization is that, unlike X-ray characterization, it is independent of the chemical composition of the product. The basis weight W of the product can thus be written as equation Eq. 5, similar to equation Eq. 3 concerning the X-ray measurements, but without the need for a calibration coefficient C:

$$W = f_{lin_{US}}\left(I_{US}, I_{US_0}\right) \qquad \text{Eq. 5}$$

where $f_{lin_{US}}(I_{US}, I_{US_0})$ represents a linearization function applied to the ultrasonic wave measurement data.

However, ultrasonic measurements are sensitive to geometric features of the product, such as its surface topography or its porosity, that scatter incoming ultrasonic waves, perturbing the measurement.

Patterned composite product

Figure 5 represents at (a) a top view of a product running parallel to the machine direction $M_{dir}$, intended to form battery components. In this example, the product presents a composite structure with the supporting substrate Sprt on which are formed the patterns Pat as electrodes made of inks. The inks can have variable compositions: typically solvents such as water or NMP containing electrode materials such as LTO (Li4Ti5012), NCA (LiNiCoAl02), NMC (LiNiCoMnO2), graphite or others, depending on the intended battery characteristics and the various tests performed by the practitioner to enhance the targeted component.

The product presents topographic singularities formed by the edges of the patterns over the supporting substrate Sprt. Topographic singularities are abrupt variations in the topographic profile of the product, susceptible to perturb ultrasonic measurements due to their abruptness, and typically formed at the edges of the patterns Pat. Figure 5 illustrates at (b) a cross-section view along an axis XX' parallel to the width direction $W_{dir}$ of the product , a top contour of which defines a topographic profile Topo of the pattern Pat. This profile presents bumps at the edges of the pattern, indicated as singularities Sing_1 on the figure. At (c), Figure 5 illustrates a cross-section view along an axis YY' parallel to the machine direction $M_{dir}$ of the product. This cross-section shows a slope indicated as singularity Sing_2 on one edge, and a bump followed by a sharp end indicated as singularity Sing_3 on the opposite edge. Such singularities typically cannot be properly characterized by ultrasonic wave measurements, as they scatter incoming ultrasonic waves.

The chemical composition of the material formed on the supporting substrate may change from one test or production to the next, up to several times a day. If measurement is required on a wet phase with undetermined proportions of solvent, it makes it even more difficult to obtain quantitative measurements by using X-ray measurements alone.

Indeed, X-ray measurements are sensitive to the basis weight of the material but also to its composition. As a consequence, in order to detect and characterize a basis weight profile of the material being manufactured, such as a coating deposited by a coating apparatus, the X-ray measurement apparatus needs to be calibrated for each new chemical composition of the material. This calibration can, in principle, be made by relying on ultrasonic wave measurements, that are specific the basis weight of the material and are largely unaffected by its composition.

As exposed above, the material being manufactured can present singularities illustrated by Figure 5, that are shaped by the fabrication process of the patterns and need to be characterized. However, as explained above, ultrasonic wave measurement is not feasible in the vicinity of topographic singularities, and thus cannot characterize these singularities nor can be used to calibrate directly the X-ray measurement at these singularities.

Live calibration method

To overcome the issue mentioned in the previous section, the inventors suggest a method to determine the basis weight of a product by an X-ray characterization system while performing a live calibration of this X-ray characterization system thanks to data obtained in parallel by an ultrasonic wave characterization system. Live calibration means that the measurements and the fabrication of the product are not interrupted to perform the calibration.

The principle of the method is to rely on an ultrasonic wave characterization of a product at an area of the product free of topographic singularities to calibrate an X-ray characterization system characterizing the whole product including topographic singularities. Such a calibration allows the X-ray characterization to output a quantitatively accurate basis weight profile, whatever may be the real chemical composition of the product being fabricated.

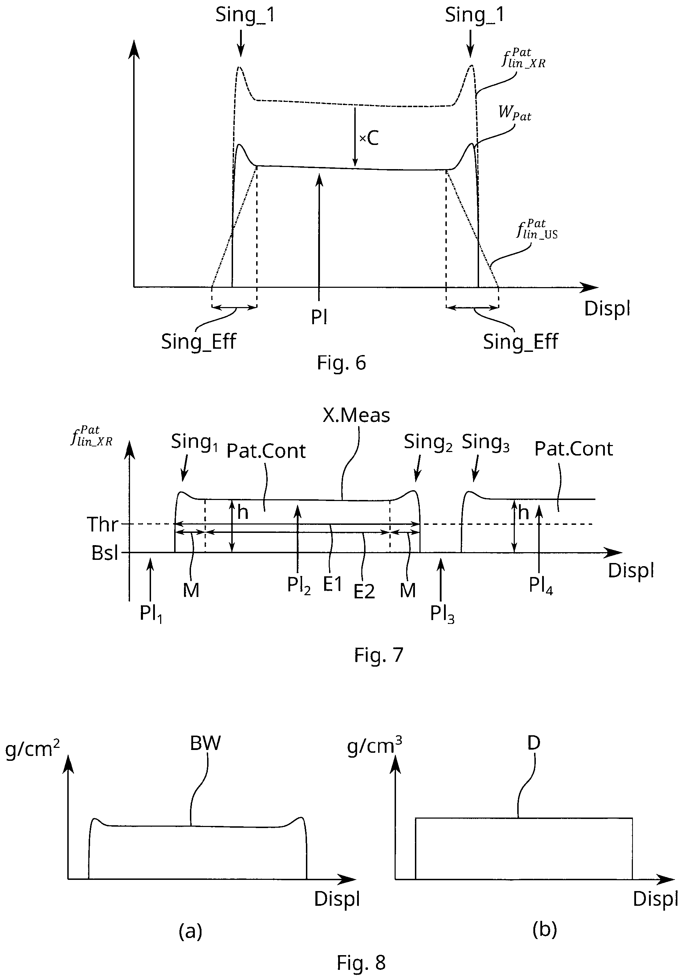

Figure 6 represents a graph superposing (i) a basis weight profile $W_{Pat}$ of a pattern, and (ii) a linearization function $f^{Pat}_{lin_{XR}}$ and (iii) a linearization function $f^{Pat}_{lin_{US}}$, respectively applied to X-ray measurement data and ultrasonic wave measurement data representative of the patterns Pat of Figure 5. The profiles are plotted against a virtual displacement axis Displ corresponding to a course ran by the sensor 20 since the starting point of the current measurements. Each point of the displacement axis Displ corresponds to a point of the product at a position along the width direction $W_{dir}$.

Differential measurements are performed, so that only the contribution of the pattern Pat is taken into account in the X-ray and the ultrasonic wave measurement data. This is done according to well known methods, for example by (i) deducing the contribution of the support substrate Sprt from X-ray measurements performed by the X-ray scanner 5 on the support Sprt prior to forming the pattern and (ii) subtracting this contribution of the support substrate Sprt from the measurement performed by the apparatus 100 taking place after the pattern Pat has been formed onto the substrate Sprt. Alternatively, the contribution of the support substrate may be known from its characteristics (composition, thickness...) or from another previous characterization.

The basis weight $W_{Pat}$ of the pattern Pat can be expressed according to equation Eq. 6:

$$W_{Pat} = C \times f^{Pat}_{lin_{XR}} \mathrm{Eq.\ 6}$$

where $f^{Pat}_{lin_{XR}}$ represents the linearization function of equation Eq. 3 applied to the contribution of the pattern Pat to the X-ray characterization of the product and C the calibration coefficient.

As illustrated by Figure 6, the X-ray profile qualitatively accurately follows the topographic profile, including singularities Sing_1, which reflects local variations in the basis weight of the product. However, this X-ray profile requires to be corrected by the calibration coefficient C as a corrective factor to lead to a quantitatively accurate basis weight profile $W_{Pat}$, as expressed by equation Eq. 6.

In contrast, the ultrasonic wave profile is quantitatively representative of the basis weight in areas far enough from topographic singularities : in these areas, such as the plateau Pl, the basis weight profile $W_{Pat}$ and the linearization function $f_{lin_{US}}^{Pat}$ applied to the ultrasonic wave measurement data are exactly superposed. However, the singularities Sing_1 affect the ultrasonic measurements in zones of effect Sing_Eff immediately surrounding these topographic singularities, depriving the measurement data of any meaningful significance. Even though the linearization function $f_{lin_{US}}^{Pat}$ is represented as straight lines in these zones, it is in fact unpredictable, irregular and cannot be used to deduce the basis weight profile.

From Figure 6, it can be understood that, in principle, the calibration coefficient C can be deduced from the X-ray measurements and the ultrasonic wave measurements considered on a plateau, far enough from the topographic singularities. The process to obtain this calibration coefficient C is explained hereunder.

Figure 7 represents a plot illustrating the X-ray measurements data X.Meas collected by the sensor 20 scanned over the product P under formation with the ordinate axis expressing $f_{lin_{XR}}^{Pat}$, the product P comprising the patterns Pat of Figure 6.

The plot exhibits plateaus $Pl_1$ and $Pl_3$ at the level of the baseline of the plot, corresponding to areas of the product where only the supporting substrate Sprt is present. Between such plateaus are plateaus $Pl_2$ and $Pl_4$ having a substantially constant height h (less than 10% in variation for example) from the baseline Bsl, plateau $Pl_2$ and $Pl_3$ exclusively due to the contribution Pat.Cont of the patterns to the X-ray measurements. The edges of the plateaus $Pl_2$ and $Pl_4$ exhibit topographic singularities $Sing_1$, $Sing_2$, and $Sing_3$.

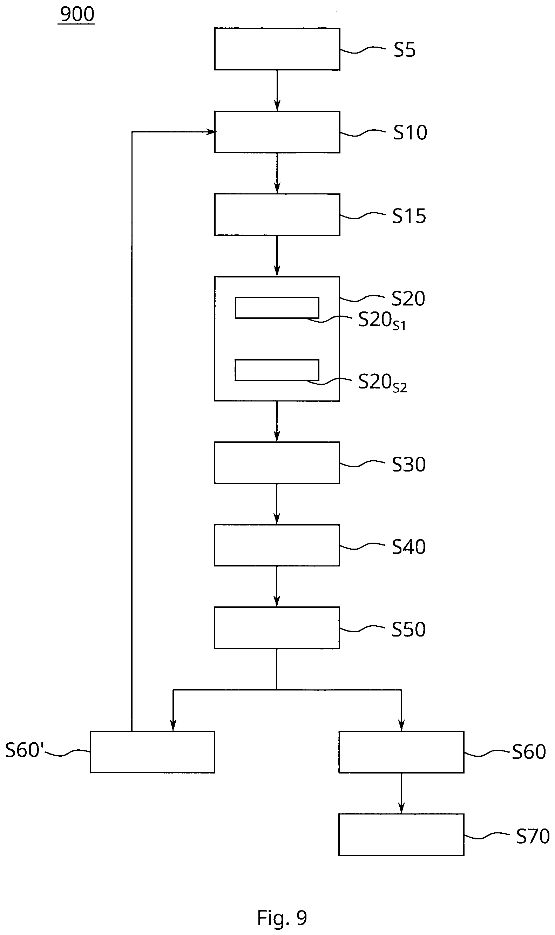

The process of characterizing a product having topographic singularities and a composition susceptible to be changed at each batch such as the product P of Figs. 5 and 6 to obtain profiles of basis weight, also designated as grammage, is described below, as process 900 illustrated by Figure 9. This process consists essentially on calibrating the X-ray measurements based on ultrasonic measurements performed in areas free of topographic singularities, i.e. portions of the plateaus $Pl_2$ and pl4.

At a step S5, the scanner 5 performs a reference X-ray absorption measurement scan across a width of the product P in a conventional way prior to formation of the patterns Pat onto the support substrate Sprt. In the next steps, these reference measurements are used to obtain X-ray differential data measurements so as to remove the contribution of the support substrate and keep the contribution of the patterns, as already explained and otherwise well-known in field.

Alternatively, characteristics, and more specifically the contribution of the support substrate Sprt to X-ray may be already well known from previous measurement or calculations based on the composition and thickness of the support substrate.

Further, contribution of the support substrate to an ulterior ultrasonic wave measurement can be obtained at this step by performing a reference ultrasonic wave measurement with the sensor 20 prior to coating the support substrate. Alternatively, this contribution may be already well known from previous measurement or calculations based on the composition and thickness of the support substrate.

At a step S10, the sensor 20 is scanned over a width of the product P, X-ray absorption measurements and ultrasonic measurements are performed simultaneously by the sensor 20; X-ray measurement data and ultrasonic measurement data are recorded in the memory of the control system 40. In the following, the expression "data" refers to data measured by the sensors, and are respectively associated to localizations of each measurement point on the virtual displacement axis Displ, allowing to associate each measurement point of the data to corresponding locations on the product P.

At a step S15, the contributions of the support substrate to the X-ray measurements and to the ultrasonic wave measurements are subtracted from respective measurement data, optionally based on respective reference measurements performed at step S5, so as to consider exclusively the contributions of the patterns to the measurements.

At a step S20, based on the X-ray measurements data, the control system 40 detects, localizes and determines the extensions E2 of portions of plateaus formed by the patterns Pat on the support substrate Sprt and over which ultrasonic wave measurement data are reliable and can be used to calibrate the X-ray sensor.

This is for example done by detecting in a first substep $S20_{S1}$ a first extension E1 of the product along the displacement axis Displ where the X-ray measurement data exhibit absolute values above a given threshold Thr, thus detecting an extension of the patterns Pat, as illustrated in Figure 7.

In a second substep $S20_{S2}$, a margin M specified by the practitioner is removed from each extremities of the first extension E1 to obtain a second extension E2 excluding the edges of the plateaus and the associated topographical singularities. Figure 7 illustrate this process applied to plateau $Pl_2$, with the second extension E2 being free from the topographic singularities $Sing_1$ and $Sing_2$ comprised in the first extension E1.

The margin M can be determined by the practitioner, depending on the characteristic of the set-up used to perform the ultrasonic wave measurements, such as the width of the ultrasonic beam generated or the distances between the ultrasonic wave source and detector and the product to be measured. Still, M may typically be for example 1 cm, 2 cm or 3 cm.

The Step 20 detailed above is merely an example, and detection, localization and determination the extensions E2 may be performed by any other appropriate conventional method, for example by image analysis of a plot representing the X-ray measurement data plotted against the displacement axis Displ.

Due to the capacity of X-ray measurement data to precisely reflect the topography of the product, even in a quantitatively inaccurate manner, it is convenient to use these data to implement the step S20 as explained above. Advantages of this method are that no further specific topographic measurement is required and X-ray measurement data are directly associated to the topography of the product. However, one may alternatively use the ultrasonic wave measurement data, or even other data obtained by another apparatus such as an optional optical measurement system, as long as these data allow to locate the edges of the patterns and establish an association between a the location the patterns and their edges and the collected X-ray and ultrasonic wave measurement data.

At a step S30, the control system 40 calculates a calibration coefficient C to be applied to the X-ray measurement data, the value of the coefficient C being a ratio calculated between the X-ray measurement data and the corresponding ultrasonic wave measurement data belonging to the extensions E2, i.e. obtained at locations situated at positions on the displacement axis Displ comprised in extensions E2 determined at step S20. The calibration coefficient C may be calculated according to equation Eq. 7:

$$C = \frac{f_{lin_{US}}^{Pat}}{f_{lin_{XR}}^{Pat}} \qquad \text{Eq. 7}$$

where $f_{lin_{US}}^{Pat}$ and $f_{lin_{XR}}^{Pat}$ represent linearization functions applied to, respectively, ultrasonic wave measurement data and X-ray measurement data each gathered from a region of the support Sprt where the pattern Pat is formed, and are representative only of the contribution of the pattern to the measurements, excluding the contribution of the support substrate.

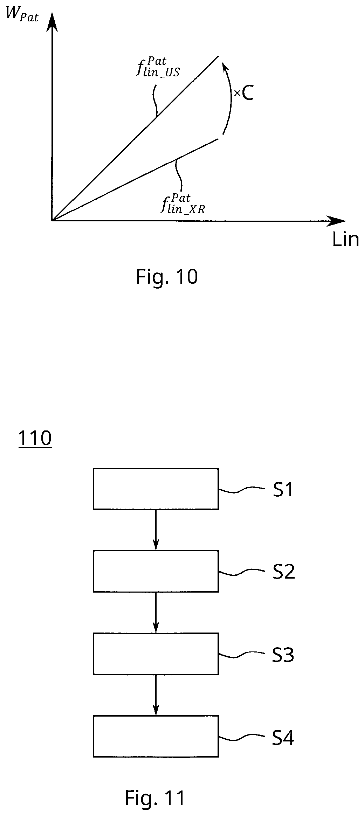

Figure 10 illustrates this operation, with graphs of $f_{lin_{US}}^{Pat}$ and $f_{lin_{XR}}^{Pat}$ plotted against a linear scale Lin and $W_{Pat}$ as the ordinate axis.

Regions of the support Sprt where the pattern Pat is formed are preferably regions of the plateaus $PI_2$ or $PI_4$ excluding topographic singularities such as the extension E2 determined at step S20. Regions of the support free of pattern may be the plateau $PI_1$ or $PI_3$, or any area of the substrate when no coating is applied by the coating apparatus 7.

This calibration coefficient has for purpose to correct the basis weight deduced from the X-ray measurement data, accordingly to equation Eq. 6. By proceeding in this manner, based on actual ultrasonic wave measurements performed on the product being processed, the calibration coefficient C is automatically calculated for the material constituting the patterns Pat formed on the support substrate Sprt, regardless of its actual composition.

In the example of Figure 7, an extension E2 of the plateau $PI_2$ is used to calculate the calibration coefficient C. Of course, the ratio can be calculated from average values on the considered extension or a plurality of such extensions defined at the step 20.

At a step S40, the control system 40 determines and labels as such which of the measurement data pertain to areas of the product where patterns are present and which of these data pertain to areas of the product where no patterns are present.

Measurement data that pertain to areas of the material where a pattern is present have values greater than the baseline Bsl. Thus, the determination is performed, for example, by the control system 40 comparing each of the X-ray measurement data to the known baseline Bsl. Measurements data exhibiting differences exceeding a predetermined threshold are considered as pertaining to an area of the product P where a pattern Pat is present and are labeled as such. The predetermined threshold can be a fixed value determined by the practitioner or can be expressed as a fraction of the height h representative of the height of a plateau, for example averaged over extension E2.

At a step S50, the control system 40 calculates corrected values of the X-ray measurement data by multiplying by the calibration coefficient C the values of the X-ray measurement data stored in the memory and labeled as pertaining to an area where the product P is present. Corrected values are stored in the memory.

At a step S60, the corrected values of the X-ray measurement data are exploited according to known conventional method, the control system 40 calculating a quantitatively accurate grammage or basis weight BW of the product in the form of a profile including topographic singularities The profile of the basis weight BW can be expressed along, for example, the displacement direction Displ and in g/cm2, as illustrated by Figure 8 at (a).

Notably, the profile can be obtained without requiring time-consuming manual operations or operations taking place out of the production line, and thus during the fabrication process.

At a step S70, based on the actual grammage or basis weight and on a topographic profile (Topo) of the product that can be obtained by a conventional means, the control system 40 calculates a profile of density D (expressed for example in g/cm³) of the product. The density (expressed for example in g/cm³) is equal to the ratio of the basis weight (expressed for example in g/cm²) over the thickness (expressed for example in cm). Figure 8 illustrates at (b) a graph of a profile of density having a constant value, which is typically the case when the material that forms the pattern has a perfectly homogeneous composition.

Alternatively or complementary to the step S60, a step S60' can be performed, in which steps S10 to S60 are repeated. In effect, X-ray data measurement of an $(n+1)^{th}$ measurement scan are corrected based on a corrected coefficient calculated on the base of measurement data obtained during the previous $n^{th}$ measurement scan. An advantage of this method is to take into account a potential drift of the characteristics of the product over time.

A direct application of the calibration coefficient C is the determination of the weight ratio of a chemical compound in a product. Examples of application are the determination of water or solvent content in a product, or ash content in paper. Indeed, the weight ratio to be determined is linked to the calibration coefficient C by the following equation Eq. 8:

$$\frac{1}{C} = \frac{WR_X}{C_X} + \frac{1 - WR_X}{C_{noX}} \quad \text{Eq. 8}$$

where $WR_X$ represents the weight ratio of a chemical compound X in a product to be characterized, $C_X$ and $C_{noX}$ respective calibration coefficients for this chemical compound and for a product equivalent to the product to be characterized except that it does not comprise the chemical compound X, as determined separately according to process 900. Since $C_X$ and $C_{noX}$, are known, then the determination of the calibration coefficient C of the product to be characterized according to the process 900 allows determining the weight ratio $WR_X$ by solving equation Eq. 8. Otherwise stated, the process 900 described above is applied three times in a process 110 illustrated by Figure 11 to determine CX, CnoX and C in respective steps S1, S2 and S3, and the weight ratio $WR_X$ is calculated in a step S4 based on equation Eq. 8, CX, CnoX and C.

For illustration, in the case of determination of water content of a product, equation 8 takes the form of equation Eq. 9:

$$\frac{1}{C} = \frac{WR_W}{C_W} + \frac{1 - WR_W}{C_{dry}} \quad \text{Eq. 9}$$

where $WR_W$ represents the weight ratio of a water in a product to be characterized, $C_X$ the correlation coefficient as determined previously for water, and $C_{dry}$ the correlation coefficient as determined separately according to process 900 on the product after it has been dried.

Other variations to the disclosed examples can be understood and effected by those skilled in the art in practicing the claimed invention, from a study of the drawings, the disclosure, and the appended claims.

**Claims**

1. Method of measuring a basis weight profile (BW) of a product (P) by an X-ray characterization, comprising the steps of:

   - performing (S10) an X-ray absorption intensity measurement based on transmission of X-rays through the product (P) and an ultrasonic wave intensity measurement on the product based on a reaction of the product to an ultrasonic wave directed towards the product (P) so as to obtain (i) X-ray measurement data (X.Meas, $f_{lin\_XR}^{Pat}$) representative of a basis weight profile ($W_{Pat}$) of the product over a width of the product as perceived via the X-ray absorption measurement and (ii) ultrasonic wave measurement data ($S_{US}$ (t), $f_{lin\_US}^{Pat}$) representative of said basis weight profile ($W_{Pat}$) of the product over said width of this product as perceived via the ultrasonic wave measurement;
   - calculating (S30) a calibration coefficient (C) of the X-ray measurement data by taking the ultrasonic wave measurement data as reference, the calibration coefficient (C) being based on a ratio between the X-ray measurement data ($f_{lin\_XR}^{Pat}$) and the ultrasonic wave measurement data ($f_{lin\_US}^{Pat}$); and
   - calculating (S60) corrected values of the X-ray measurement data by multiplication of the X-ray measurement data by the calibration coefficient.

2. The method according to claim 1, wherein the calibration coefficient (C) is based on a ratio between a linearization function applied to the X-ray measurement data ($f_{lin\_XR}^{Pat}$) and a linearization function applied to the ultrasonic wave measurement data ($f_{lin\_US}^{Pat}$).

3. The method according to claim 1 or claim 2, the section of the product (P) comprising at least one pattern (Pat) on a supporting substrate (Sprt), the method further comprising the steps of determining (S20) an extension (E2) of a plateau ($Pl_2$, $Pl_4$) formed by the pattern (Pat) on the support substrate (Sprt), the X-ray measurement data and the ultrasonic wave measurement data used to calculate the calibration coefficient belonging to the extension (E2).

**4.** The method according to claim 3, the extension (E2) being free of topographic singularities ($Sing_1$, $Sing_2$).

**5.** The method according to any one of claims 1 to 4, wherein the method is applied to a product (P) being fabricated by forming patterns (Pat) of coating on a support substrate (Sprt) by means of a coating apparatus (7), the X-ray absorption measurement and the ultrasonic wave measurement being performed downstream of the coating apparatus (7).

**6.** The method according to claim 5, wherein the X-ray measurement data (X.Meas) are differential data relative to a reference measurement performed upstream of the coating apparatus (7).

**7.** The method according to any one of claims 1 to 6, the method comprising a step of calculating a basis weight ($W_{Pat}$, BW) profile of the product (P) based on the X-ray measurement data (X.Meas) and the calibration coefficient (C).

**8.** A method for calculating the weight ratio of a chemical compound in a product comprising the steps of:

- determining, according to the method of claim 1, a first calibration coefficient of the chemical compound ;
- determining, according to the method of claim 1, a second calibration coefficient of a modified product of a same composition of the product except that the modified product does not substantially comprise the chemical compound ;
- determining, according to the method of claim 1, a third calibration coefficient of the product ; and
- calculating the weight ratio based on the first calibration coefficient, the second calibration coefficient, and the third calibration coefficient.

**9.** Measurement apparatus (100) comprising a frame (10) extending along a width direction ($W_{dir}$), a sensor (20) movable along the width direction, and a drive system (30) configured to move the sensor (20) along the width direction ($W_{dir}$), the sensor (20) comprising an emitter head (22) and a receiver head (24) facing the emitter head (22), and a control system (40) configured to control the sensor and the drive system and comprising a computer memory and an electronic computer, wherein :

- the emitter head (22) comprises (i) an X-ray source ($S_{XR}$) and (ii) an ultrasonic wave source ($S_{US}$);
- the receiver head (24) comprises (i) an X-ray detector ($Sens_{XR}$) and (ii) an ultrasonic wave detector ($Sens_{US}$); and
- the control system is configured to perform the method of performing an X-ray characterization of a product (P) according to any one of claims 1 to 8.

**10.** Production line (PL) comprising the measurement apparatus according to claim 9 and a coating apparatus (7) situated upstream of the measurement apparatus.

**11.** The production line according to claim 10, further comprising a reference X-ray measurement apparatus (5) configured to perform reference X-ray absorption measurements and situated upstream of the coating apparatus (7).

**Patentansprüche**

**1.** Verfahren zum Messen eines Flächengewichtsprofils (BW) eines Produkts (P) mittels einer Röntgencharakterisierung, umfassend die Schritte:

- Durchführen (S10) einer Messung der Röntgenabsorptionsintensität auf der Grundlage der Transmission von Röntgenstrahlen durch das Produkt (P) und einer Ultraschallwellenintensitätsmessung an dem Produkt auf der Grundlage einer Reaktion des Produkts auf eine auf das Produkt (P) gerichtete Ultraschallwelle, um (i) Röntgenmessdaten (X.Meas, $f_{lin\_XR}^{Pat}$), die für ein Flächengewichtsprofil ($W_{Pat}$) des Produkts über eine Breite des Produkts repräsentativ sind, wie es durch die Röntgenabsorptionsmessung erfasst wird, und (ii) Ultraschallwellenmessdaten (Sus(t), $f_{lin\_US}^{Pat}$), die für das Flächengewichtsprofil ($W_{Pat}$) des Produkts über die Breite dieses Produkts repräsentativ sind, wie es durch die Ultraschallwellenmessung erfasst wird;
- Berechnen (S30) eines Kalibrierungskoeffizienten (C) der Röntgenmessdaten unter Verwendung der Ultraschallwellenmessdaten als Referenz, wobei der Kalibrierungskoeffizient (C) auf einem Verhältnis zwischen den Röntgenmessdaten ( $f_{lin\_XR}^{Pat}$ ) und den Ultraschallwellenmessdaten ( $f_{lin\_US}^{Pat}$ ) basiert; und
- Berechnen (S60) korrigierter Werte der Röntgenmessdaten durch Multiplikation der Röntgenmessdaten mit dem Kalibrierungskoeffizienten.

**2.** Verfahren nach Anspruch 1, wobei der Kalibrierungskoeffizient (C) auf einem Verhältnis zwischen einer auf die Röntgenmessdaten angewendeten Linearisierungsfunktion ( $f_{lin\_XR}^{Pat}$ ) und einer auf die Ultraschallmessdaten ( $f_{lin\_US}^{Pat}$ ) angewendeten Linearisierungsfunktion basiert.

**3.** Verfahren nach Anspruch 1 oder Anspruch 2, wobei der Abschnitt des Produkts (P) mindestens ein Muster (Pat) auf einem Trägersubstrat (Sprt) umfasst, wobei das Verfahren ferner die Schritte des Bestimmens (S20) einer Ausdehnung (E2) eines Plateaus (Pl$_2$, Pl$_4$), das durch das Muster (Pat) auf dem Trägersubstrat (Sprt) gebildet wird, wobei die Röntgenmessdaten und die Ultraschallwellenmessdaten zum Berechnen des zur Erweiterung (E2) gehörenden Kalibrierungskoeffizienten verwendet werden.

**4.** Verfahren nach Anspruch 3, wobei die Erweiterung (E2) frei ist von topographischen Singularitäten (Sing$_1$ , Sing$_2$).

**5.** Verfahren nach einem der Ansprüche 1 bis 4, wobei das Verfahren auf ein Produkt (P) angewendet wird, das durch Bilden von Beschichtungsmustern (Pat) auf einem Trägersubstrat (Sprt) mittels einer Beschichtungsvorrichtung (7) hergestellt wird, wobei die Röntgenabsorptionsmessung und die Ultraschallwellenmessung stromabwärts der Beschichtungsvorrichtung (7) durchgeführt werden.

**6.** Verfahren nach Anspruch 5, wobei die Röntgenmessdaten (X.Meas) Differenzdaten relativ zu einer Referenzmessung sind, die stromaufwärts der Beschichtungsvorrichtung (7) durchgeführt wird.

**7.** Verfahren nach einem der Ansprüche 1 bis 6, wobei das Verfahren einen Schritt zur Berechnung eines Flächengewichtsprofils ($W_{Pat}$, BW) des Produkts (P) basierend auf den Röntgenmessdaten (X.Meas) und dem Kalibrierungskoeffizienten (C) umfasst.

**8.** Verfahren zum Berechnen des Gewichtsverhältnisses einer chemischen Verbindung in einem Produkt, das die folgenden Schritte umfasst:

- Bestimmen, gemäß dem Verfahren nach Anspruch 1, eines ersten Kalibrierungskoeffizienten der chemischen Verbindung;
- Bestimmen, gemäß dem Verfahren nach Anspruch 1, eines zweiten Kalibrierungskoeffizienten eines modifizierten Produkts mit derselben Zusammensetzung wie das Produkt, mit der Ausnahme, dass das modifizierte Produkt im Wesentlichen nicht die chemische Verbindung umfasst;

- Bestimmen, gemäß dem Verfahren von Anspruch 1, eines dritten Kalibrierungskoeffizienten des Produkts; und
- Berechnen des Gewichtsverhältnisses basierend auf dem ersten Kalibrierungskoeffizienten, dem zweiten Kalibrierungskoeffizienten und dem dritten Kalibrierungskoeffizienten.

**9.** Messeinrichtung (100), die einen Rahmen (10) umfasst, der sich entlang einer Breitenrichtung (W$_{Rich}$) erstreckt, einen Sensor (20), der entlang der Breitenrichtung beweglich ist, und ein Antriebssystem (30), das so konfiguriert ist, dass es den Sensor (20) entlang der Breitenrichtung (W$_{Rich}$) bewegt, wobei der Sensor (20) einen Emitterkopf (22) und einen dem Emitterkopf (22) zugewandten Empfängerkopf (24) umfasst, und ein Steuersystem (40), das zum Steuern des Sensors und des Antriebssystems konfiguriert ist und einen Computerspeicher und einen elektronischen Computer umfasst, wobei:

- der Emitterkopf (22) (i) eine Röntgenquelle (S$_{XR}$) und (ii) eine Ultraschallwellenquelle (Sus) umfasst;
- der Empfängerkopf (24) (i) einen Röntgendetektor (Sens$_{XR}$) und (ii) einen Ultraschallwellendetektor (Sensus) umfasst; und
- das Steuersystem dazu konfiguriert ist, das Verfahren zur Durchführung einer Röntgencharakterisierung eines Produkts (P) gemäß einem der Ansprüche 1 bis 8 durchzuführen.

**10.** Produktionslinie (PL), umfassend die Messeinrichtung nach Anspruch 9 und eine der Messeinrichtung vorgeschaltete Beschichtungsvorrichtung (7).

**11.** Produktionslinie nach Anspruch 10, die ferner eine Referenzröntgenmesseinrichtung (5) umfasst, die zum Durchführen von Referenzröntgenabsorptionsmessungen konfiguriert ist und sich vor der Beschichtungsvorrichtung (7) befindet.

**Revendications**

**1.** Procédé de mesure d'un profil de grammage (BW) d'un produit (P) par caractérisation aux rayons X, comprenant les étapes consistant à :

- réaliser (S10) une mesure de l'intensité d'absorption des rayons X basée sur la transmission des rayons X à travers le produit (P) et une mesure de l'intensité des ondes ultrasonores sur le produit basée sur une réaction du produit à une onde ultrasonore dirigée vers le produit (P) afin d'obtenir (i) des données de mesure par rayons X (X. Meas, $f_{lin\_XR}^{Pat}$ ) représentatives d'un profil de grammage ($W_{pat}$) du produit sur une largeur du produit telle que perçue par la mesure d'absorption des rayons X et (ii) des données de mesure par ondes ultrasonores (Sus(t), $f^{Pat}_{lin\_US}$) représentatives dudit profil de grammage ($W_{pat}$) du produit sur ladite largeur de ce produit telle que perçue par la mesure par ondes ultrasonores ;

- calculer (S30) un coefficient d'étalonnage (C) des données de mesure par rayons X en prenant les données de mesure par ondes ultrasonores comme référence, le coefficient d'étalonnage (C) étant basé sur un rapport entre les données de mesure par rayons X ( $f^{Pat}_{lin\_XR}$ ) et les données de mesure par ondes ultrasonores ( $f^{Pat}_{lin\_US}$ ) ; et

- calculer (S60) des valeurs corrigées des données de mesure par rayons X en multipliant les données de mesure par rayons X par le coefficient d'étalonnage.

2. Procédé selon la revendication 1, dans lequel le coefficient d'étalonnage (C) est basé sur un rapport entre une fonction de linéarisation appliquée aux données de mesure par rayons X ( $f^{Pat}_{lin\_XR}$ ) et une fonction de linéarisation appliquée aux données de mesure par ondes ultrasonores ( $f^{Pat}_{lin\_US}$ ).

3. Procédé selon la revendication 1 ou la revendication 2, la section du produit (P) comprenant au moins un motif (Pat) sur un substrat de support (Sprt), le procédé comprenant en outre les étapes consistant à déterminer (S20) une extension (E2) d'un plateau ($Pl_2$, $Pl_4$) formé par le motif (Pat) sur le substrat de support (Sprt), les données de mesure par rayons X et les données de mesure par ondes ultrasonores utilisées pour calculer le coefficient d'étalonnage appartenant à l'extension (E2).

4. Procédé selon la revendication 3, l'extension (E2) étant exempte de singularités topographiques ($Sing_1$, $Sing_2$).

5. Procédé selon l'une quelconque des revendications 1 à 4, dans lequel le procédé est appliqué à un produit (P) fabriqué en formant des motifs (Pat) de revêtement sur un substrat de support (Sprt) au moyen d'un appareil de revêtement (7), la mesure d'absorption des rayons X et la mesure par ondes ultrasonores étant réalisées en aval de l'appareil de revêtement (7).

6. Procédé selon la revendication 5, dans lequel les données de mesure par rayons X (X. Meas) sont des données différentielles par rapport à une mesure de référence réalisée en amont de l'appareil de revêtement (7).

7. Procédé selon l'une quelconque des revendications 1 à 6, le procédé comprenant une étape consistant à calculer un profil de grammage ($W_{pat}$, BW) du produit (P) sur la base des données de mesure par rayons X (X. Meas) et du coefficient d'étalonnage (C).

8. Procédé de calcul du rapport pondéral d'un composé chimique dans un produit, comprenant les étapes consistant à :

- déterminer, selon le procédé de la revendication 1, un premier coefficient d'étalonnage du composé chimique ;
- déterminer, selon le procédé de la revendication 1, un deuxième coefficient d'étalonnage d'un produit modifié de même composition que le produit, à l'exception du fait que le produit modifié ne comprend pas de manière substantielle le composé chimique ;
- déterminer, selon le procédé de la revendication 1, un troisième coefficient d'étalonnage du produit ; et
- calculer le rapport pondéral sur la base du premier coefficient d'étalonnage, du deuxième coefficient d'étalonnage et du troisième coefficient d'étalonnage.

9. Appareil de mesure (100) comprenant un châssis (10) s'étendant dans une direction de largeur ($W_{dir}$), un capteur (20) mobile dans la direction de largeur, et un système d'entraînement (30) configuré pour déplacer le capteur (20) dans la direction de largeur ($W_{dir}$), le capteur (20) comprenant une tête émettrice (22) et une tête réceptrice (24) faisant face à la tête émettrice (22), et un système de commande (40) configuré pour commander le capteur et le système d'entraînement et comprenant une mémoire d'ordinateur et un ordinateur électronique, dans lequel :

- la tête émettrice (22) comprend (i) une source de rayons X ($S_{XR}$) et (ii) une source d'ondes ultrasonores (Sus) ;
- la tête réceptrice (24) comprend (i) un détecteur de rayons X ($Sens_{XR}$) et (ii) un détecteur d'ondes ultrasonores (Sensus) ; et
- le système de commande est configuré pour exécuter le procédé de caractérisation par rayons X d'un produit (P) selon l'une quelconque des revendications 1 à 8.

10. Ligne de production (PL) comprenant l'appareil de mesure selon la revendication 9, et un appareil de revêtement (7) situé en amont de l'appareil de mesure.

**11.** Ligne de production selon la revendication 10, comprenant en outre un appareil de mesure par rayons X de référence (5) configuré pour réaliser des mesures d'absorption de rayons X de référence et situé en amont de l'appareil de revêtement (7).

Fig. 1

Fig. 2

Fig. 3

Fig. 4

Fig. 5

Fig. 6

Fig. 7

(a)

(b)

Fig. 8

Fig. 9

Fig. 10

Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5621173 A
- US 4446735 A
- GB 1271438 A
- EP 1950527 A

**Non-patent literature cited in the description**

- **JASIUNIENE ELENA et al.** Non-destructive Evaluation of the Quality of Adhesive Joints Using Ultrasound, X-ray, and Feature-based Delta Fusion. *Applied Science*, 01 December 2022, vol. 12 (24), 12930